# EUROPÄISCHE PATENTSCHRIFT

(11) **EP 0 721 578 B1**
(45) Veröffentlichungstag und Bekanntmachung des Hinweises auf die Patenterteilung: **26.03.1997**
(21) Anmeldenummer: 94927492.2
(22) Anmeldetag: 28.09.1994
(51) Int. Cl.: G01N 1/36

(54) **KASSETTE ZUR BEHANDLUNG VON PROBEN FÜR HISTOLOGISCHE UNTERSUCHUNGEN, INSBESONDERE ZUR SCHNITTPRÄPARATION**
CARTRIDGE FOR TREATING SAMPLES FOR HISTOLOGICAL EXAMINATION, IN PARTICULAR FOR PREPARING SLICES
CASSETTE DE TRAITEMENT D'ECHANTILLONS EN VUE D'EXAMENS HISTOLOGIQUES, NOTAMMENT DE PREPARATION DE COUPES

(30) Priorität: 29.09.1993 DE 4333118
(43) Veröffentlichungstag der Anmeldung: 17.07.1996
(73) Patentinhaber: Leica Instruments GmbH, D-69222 Nussloch (DE)
(72) Erfinder: GRAUPNER, Dag, D-69214 Eppelheim (DE)
(74) Vertreter: Stamer, Harald, Dipl.-Phys.
(86) Internationale Anmeldenummer: DE9401123
(87) Internationale Veröffentlichungsnummer: WO9509352

(56) Entgegenhaltungen:
- EP-A- 0 471 534
- US-A- 4 421 246
- US-A- 5 127 537

## Beschreibung

Die Erfindung betrifft ein Kassette zur Behandlung von Proben in Flüssigkeiten, insbesondere für eine nachfolgende Einbettung in histologisches Paraffin. Diese Einbettung dient zur Vorbereitung der Proben für eine nachfolgende Schnittpräparation für mikroskopische Untersuchungen.

Die heute übliche Standardmethodik sieht eine Behandlung der Probe durch mehrfache chemische Fixation in gepufferten Aldehyd- und/oder Formalin-Lösungen vor. Dadurch soll erreicht werden, daß die Probe entwässert wird. Nach der Entwässerung wird zur Stabilisierung Paraffin in die Probe infiltriert.

Zur chemische Fixation und Entwässerung wird die Probe in eine mit Öffnungen versehenen Kassette eingebracht. Einzelne oder mehrere Kassetten werden in einem speziellen Behälter - Histoprozessor - mit den entsprechenden Reagenzien behandelt. Die Behandlung erfolgt vorzugsweise durch ständiges Umpumpen der entsprechenden Flüssigkeit im Behälter. Durch die Bewegung der Flüssigkeit im Behälter soll die Behandlungszeit der Probe verkürzt und gleichzeitig eine hohe Eindringtiefe der Flüssigkeit in die Probe erreicht werden.

Bei der Behandlung der Proben hat es sich gezeigt, daß die Behandlungszeit und die Eindringtiefe optimiert werden kann, wenn die Flüssigkeiten an der Probenoberfläche nicht gleichmäßig vorbeiströmen, sondern an der Probenoberfläche Verwirbelungen auftreten.

Bekannte Kassettensysteme sind beispielsweise in der US 3 674 396, der US 4 220 252 und der US 4 421 246 beschrieben. Diese Kassetten weisen einen rechteckigen Grundkörper mit einem Boden und Seitenwänden auf, wobei im Boden und/oder in den Wänden Öffnungen in Form von Bohrungen oder Schlitzen vorgesehen sind. Die Kassetten sind teilweise übereinander stapelbar ausgeführt und werden durch einen ebenfalls mit Öffnungen versehenen Deckel verschlossen. Die in den o.a. Schriften beschriebenen Kassetten haben sich in der Praxis nur bedingt bewährt, da die umgepumpte Flüssigkeit als kontinuierlicher Strom an den Proben vorbeifließt. Dadurch muß neben einer längeren Behandlungszeit auch eine relativ geringe Eindringtiefe der Flüssigkeit in die Probe in Kauf genommen werden. Bei größeren Proben kann der chemische Behandlungsgrad sogar völlig unzureichend sein, wodurch die Probe für die nachfolgende Schnittpräparation unbrauchbar ist.

Eine Kassette, die Behandlungszeit und die Eindringtiefe optimiert ist aus der EP 0 471 534 A2 und der korrespondierenden US 5 080 869 bekannt.

In beiden Schriften wird ein stapelbares Kassettensystem beschrieben, bei dem im Boden und in den Seitenwänden eines rechteckigen Behälters schlitzförmige Öffnungen angeordnet sind. Die Öffnungen in den Seitenwänden sind zu den jeweiligen Wänden schräg angeordnet. Durch diese Maßnahme wird eine Verwirbelung der Flüssigkeit an der Probenoberfläche und somit eine optimierte Behandlungszeit und Eindringtiefe erreicht. Zum Schließen der Kassette ist ein Deckel mit Schlitzen vorgesehen, wobei die Öffnungen in Boden und Deckel parallel übereinander angeordnet sind und senkrecht durch die Deckel- und Bodenfläche verlaufen.

Da derartige Kassetten sehr klein dimensioniert sind (z.B. 2.5 cm * 3.5 cm) und vorzugsweise aus Kunststoff hergestellt werden, hat es sich in der Praxis gezeigt, daß durch die Vielzahl der Öffnungen die präzise Herstellung derartiger Kassetten sehr schwierig und mit hohem Ausschuß verbunden ist. Beim praktischen Gebrauch der Kassette hat es sich außerdem gezeigt, daß durch die Vielzahl der im Boden, Deckel und in den Seitenwänden vorgesehenen Öffnungen, die Kassette instabil gegen mechanische Verformungen geworden ist. So treten neben der bedingten Stapelbarkeit auch Schwierigkeiten beim Verschließen der Kassette mit dem Kunststoffdeckel auf.

Es ist daher Aufgabe der vorliegenden Erfindung, ausgehend vom bekannten Stand der Technik, den optimierten Fluß der jeweiligen Reagenzien innerhalb der Kassette zu gewährleisten und dabei neben einer vereinfachten Herstellung die mechanische Stabilität der Kassette sicherzustellen.

Diese Aufgabe wird erfindungsgemäß durch die kennzeichnenden Merkmale des Patentanspruchs 1 gelöst. Vorteilhafte Weiterbildungen der Erfindung sind Gegenstand der Unteransprüche.

Die erfindungsgemäße Kassette wird nachfolgend an Hand der schematischen Darstellungen in der Zeichnung in mehreren Ausführungsbeispielen näher erläutert.

In der Zeichnung zeigt:
- Fig. 1: die geschlossene Kassette in Aufsicht
- Fig. 2: einen Schnitt durch die geschlossene Kassette entlang der Linie I - I aus der Fig. 1
- Fig. 3a: ein Ausführungsbeispiel zur Anordnung der Öffnungen im Deckelteil der Kassette
- Fig. 3b: ein weiteres Ausführungsbeispiel zur Anordnung der Öffnungen im Deckelteil der Kassette
- Fig. 4a: ein Detail der geschlossenen Kassette mit versetzter Anordnung der Öffnungen
- Fig. 4b: ein Detail der geschlossenen Kassette mit veränderter Anordnung der Öffnungen

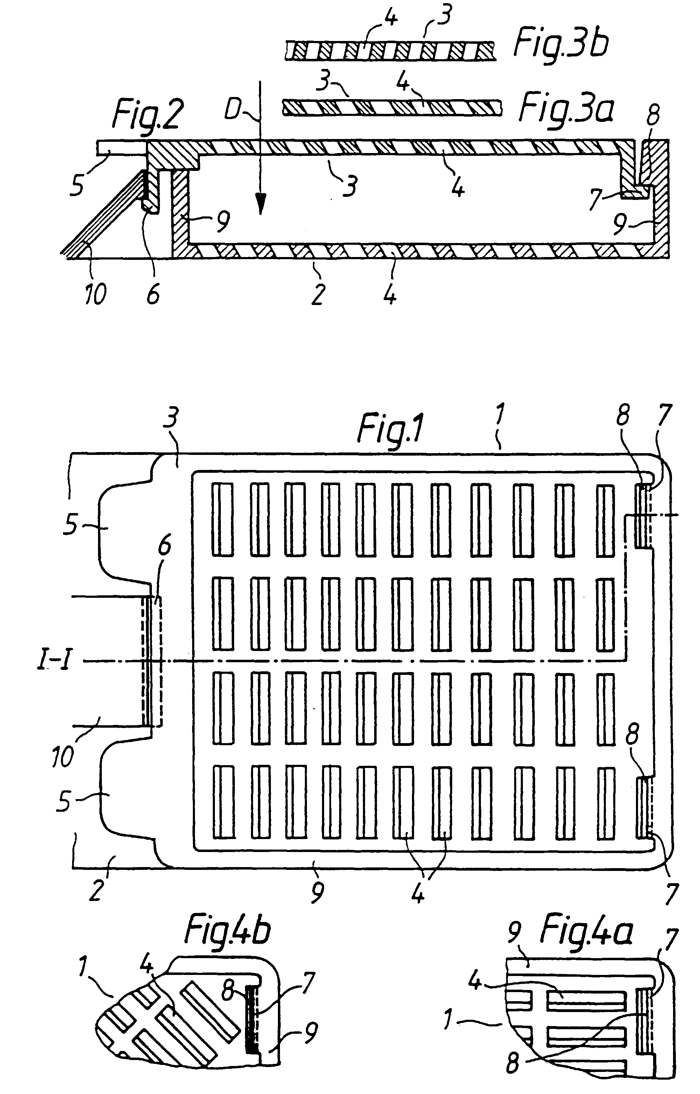

Die Figur 1 zeigt eine Aufsicht auf eine geschlossenen Kassette 1 mit einem Bodenteil 2, Seitenteilen 9 und einem Deckelteil 3. Das Bodenteil 2 und die Seitenteile 9 sind als einstückiges Kunststoffspritzgußteil ausgeführt. Im Boden- 2 und Deckelteil 3 sind jeweils mehrere schlitzförmige Öffnungen 4 vorgesehen.

Das Deckelteil 3 ist mit den Seitenteilen 9 lösbar verbunden. Dazu weist das Deckelteil 3 zwei Verschlußhaken 7 und einen Verschlußhaken 6 auf, die in weitere Haken 8 bzw. 10 des Bodenteils 2 eingreifen. Durch diese Verbindung wird die Kassette 1 gegen seitliches Ausströmen der Flüssigkeit verschlossen. Zur besseren Handhabung der Kassette 1 sind am Deckelteil 3 zwei Laschen 5 angeformt.

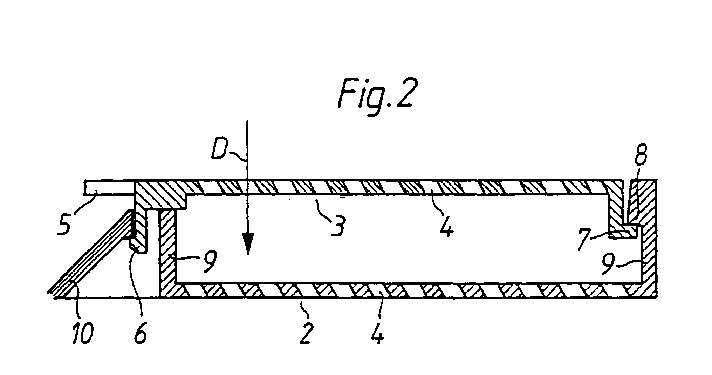

Die Figur 2 zeigt einen Schnitt entlang der Linie I - I (Figur 1) durch die Kassette 1 mit den im Boden- 2 und Deckelteil 3 schräggestellten schlitzförmigen Öffnungen 4. Die Seitenwände der Öffnungen 4 sind parallel zueinander ausgeführt. Die Durchflußrichtung D der nicht mit dargestellten Flüssigkeit ist als Pfeildarstellung angedeutet. Aus dieser Darstellung wird deutlich, daß die Lage der Öffnungen 4 im Bodenteil 2 in Bezug auf die Lage der Öffnungen 4 im Deckelteil 3 versetzt zueinander angeordnet sind. Zusammen mit den schrägstehenden Öffnungen 4 hat diese Maßnahme zur Folge, daß die direkte Flußrichtung unterbrochen ist und innerhalb der Kassette 1 die gewünschten Verwirbelungen der Flüssigkeit auftreten.

Die Figuren 3a und 3b zeigen weitere Ausführungsbeispiele der Erfindung, wobei in der Figur 3a die schlitzförmigen Öffnungen 4 im Deckelteil 3 gegenüber den Öffnungen 4 im Bodenteil 2 (Figur 2) in Durchflußrichtung D fluchtend übereinander angeordnet sind.

In der Figur 3b sind die Öffnungen 4 im Deckelteil 3 gegenüber den Öffnungen 4 im Bodenteil 2 (Figur 2) in einer anderen Richtung orientiert. Dies führt ebenfalls zu einer verbesserten Verwirbelung der Flüssigkeit innerhalb der Kassette 1 durch eine Wirbelrichtungsumkehr.

Die Figuren 4a und 4b zeigen weitere Ausführungsbeispiele der Ausrichtung der Öffnungen 4 auf dem Deckel- 3 bzw. Bodenteil 2. In diesen Figuren ist die Ausrichtung der einzelnen Öffnungen 4 in Bezug auf die Seitenteile 9 gedreht vorgesehen. Dabei können die Drehwinkel im Deckel- 3 von den Winkeln im Bodenteil 2 abweichen.

Selbstverständlich liegt es im Rahmen der Erfindung, die Ausrichtung und Dimensionierung der Öffnungen 4 auf dem Deckel- 3 und/oder Bodenteil 2 und/oder die Richtung der Öffnungen 4 im Deckel- 3 und/oder Bodenteil 2 unterschiedlich vorzunehmen.

### Bezugszeichenliste

- 1 -: Kassette
- 2 -: Bodenteil 1
- 3 -: Deckelteil
- 4 -: schlitzförmige Öffnungen
- 5 -: Lasche
- 6 -: Verschlußhaken
- 7 -: Verschlußhaken
- 8 -: Verschlußhaken
- 9 -: Seitenteile
- 10 -: Verschlußhaken
- D -: Durchflußrichtung

## Patentansprüche

1. Kassette (1) zur Behandlung von Proben in Flüssigkeiten, insbesondere zur Vorbereitung von Proben für eine nachfolgende Schnittpräparation für mikroskopische Untersuchungen, mit einem Bodenteil (2) und daran angeformten Seitenteilen (9) und mit einem lösbar befestigten Deckelteil (3), wobei in diesen Bauteilen (2;3) mehrere schlitzförmig ausgebildete Öffnungen (4) vorgesehen sind, **dadurch gekennzeichnet**, daß die Seitenteile (9) als geschlossene Einheit ausgebildet sind und die schlitzförmigen Öffnungen (4) im Boden- (2) und im Deckelteil (3) unter einem von 90° abweichenden Winkel zur Boden- und Deckeloberseite angeordnet sind.

2. Kassette (1) zur Behandlung von Proben in Flüssigkeiten nach Anspruch 1, **dadurch gekennzeichnet**, daß in Durchflußrichtung (D) die Öffnungen (4) in dem Bodenteil (2) in Bezug auf die Öffnungen (4) im Deckelteil (3) fluchtend übereinander angeordnet sind.

3. Kassette (1) zur Behandlung von Proben in Flüssigkeiten nach Anspruch 1, **dadurch gekennzeichnet**, daß in Durchflußrichtung (D) die Öffnungen (4) in dem Bodenteil (2) in Bezug auf die Öffnungen (4) im Deckelteil (3) zueinander versetzt angeordnet sind.

4. Kassette (1) zur Behandlung von Proben in Flüssigkeiten nach Anspruch 1, **dadurch gekennzeichnet**, daß der Durchgangswinkel der Öffnungen (4) im Bodenteil (2) vom Durchgangswinkel der Öffnungen (4) im Deckelteil (3) abweicht.

5. Kassette (1) zur Behandlung von Proben in Flüssigkeiten nach mindestens einem der vorherigen Ansprüche, **dadurch gekennzeichnet**, daß die Längsrichtung der schlitzförmigen Öffnungen (4) im Boden-(2) und/oder Deckelteil (3) in Bezug auf die Seitenteilen (9) unter einem von 90° abweichenden Winkel orientiert angeordnet ist.

6. Kassette (1) zur Behandlung von Proben in Flüssigkeiten, nach Anspruch 1 - 5, **dadurch gekennzeichnet**, daß das Bodenteil (2) mit den Seitenteilen (9) als einstückiges Kunstoffspritzteil ausgebildet ist.

## Claims

1. Cassette (1) for the treatment of samples in liquids, in particular for the preparation of samples for a subsequent slice preparation for examinations under a microscope, with a base part (2) and side parts (9) shaped on thereat and with a detachably fastened lid part (3), wherein several slot-shaped openings (4) are provided in these components (2; 3), characterised thereby, that the side parts are formed as closed unit and the slot-shaped openings (4) are arranged in the base part (2) and the lid part (3) at an angle differing from 90° to the upper sides of the base and the lid.

2. Cassette (1) for the treatment of samples in liquids according to claim 1, characterised thereby, that the openings (4) in the base part (2) are arranged in alignment one above the other with respect to the openings (4) in the lid part (3) in the throughflow direction (D).

3. Cassette (1) for the treatment of samples in liquids according to claim 1, characterised thereby, that the openings (4) in the base part (2) are arranged one staggered relative to the other with respect to the openings(4) in the lid part (3) in the throughflow direction (D).

4. Cassette (1) for the treatment of samples in liquids according to claim 1, characterised thereby, that the passage angle of the openings (4) in the base part (2) differs from the passage angle of the openings (4) in the lid part (3).

5. Cassette (1) for the treatment of samples in liquids according to at least one of the preceding claims, characterised thereby, that the longitudinal direction of the slot-shaped openings (4) in the base part (2) and/or in the lid part (3) is arranged to be oriented at an angle differing from 90° with respect to the side parts (9).

6. Cassette (1) for the treatment of samples in liquids according to claim 1 to 5, characterised thereby, that the base part (2) with the side parts (9) is formed in one piece as injection-moulded part of synthetic material.

## Revendications

1. Cassette (1) de traitement d'échantillons dans des liquides, notamment pour préparer des échantillons pour une préparation de coupes subséquente pour des examens microscopiques, avec une partie de fond (2) et des parties latérales (9) rapportées par formage à celle-ci et avec une partie de couvercle fixée amoviblement (3), dans ces composants (2; 3) étant prévues plusieurs ouvertures (4) réalisées en forme de fente, caractérisée en ce que les parties latérales (9) sont réalisées sous forme d'unité fermée et que les ouvertures en forme de fente sont disposées dans la partie de fond (2) et dans la partie de couvercle (3) suivant un angle s'écartant de 90° relativement au côté de fond et au côté supérieur du couvercle.

2. Cassette (1) de traitement d'échantillons dans des liquides selon la revendication 1, caractérisée en ce que dans la direction d'écoulement (D), les ouvertures (4) dans la partie de fond (2) sont disposées relativement aux ouvertures (4) dans la partie de couvercle (3) en alignement les unes au-dessus des autres.

3. Cassette (1) de traitement d'échantillons dans des liquides selon la revendication 1, caractérisée en ce que dans la direction d'écoulement (D), les ouvertures (4) dans la partie de fond (2) sont disposées relativement aux ouvertures (4) dans la partie de couvercle (3) de façon décalée les unes par rapport aux autres.

4. Cassette (1) de traitement d'échantillons dans des liquides selon la revendication 1, caractérisée en ce que l'angle de passage des ouvertures (4) dans la partie de fond (2) s'écarte de l'angle de passage des ouvertures (4) dans la partie de couvercle (3).

5. Cassette (1) de traitement d'échantillons dans des liquides selon au moins l'une des revendications précédentes, caractérisée en ce que la direction longitudinale des ouvertures en forme de fente (4) dans la partie de fond (2) et/ou la partie de couvercle (3) est orientée relativement aux parties latérales (9) suivant un angle s'écartant de 90°.

6. Cassette (1) de traitement d'échantillons dans des liquides selon les revendications 1 - 5, caractérisée en ce que la partie de fond (2) est réalisée avec les parties latérales (9) sous forme d'une seule pièce moulée en matière synthétique.
